# EUROPEAN PATENT APPLICATION

(11) **EP 4 171 092 A1**
(43) Date of publication of application: **26.04.2023**
(21) Application number: 21829384.3
(22) Date of filing: 16.06.2021
(51) Int. Cl.: H04W 16/14, H04B 7/0413, H04W 48/18

(54) **METHOD AND APPARATUS FOR CONTROLLING TERMINAL RESIDENT NETWORK AND READABLE STORAGE MEDIUM**

(30) Priority: 23.06.2020 CN 202010581680
(71) Applicant: ZTE Corporation, Shenzhen, Guangdong 518057 (CN)
(72) Inventor: SUN, Guoping, Shenzhen, Guangdong 518057 (CN); ZHANG, Dekun, Shenzhen, Guangdong 518057 (CN); WANG, Guoyan, Shenzhen, Guangdong 518057 (CN)
(74) Representative: Canzler & Bergmeier Patentanwälte Partnerschaft mbB
(86) International application number: PCT/CN2021/100445
(87) International publication number: WO 2021/259115

(57) **Abstract**

A method and apparatus for controlling a terminal resident network and a computer-readable storage medium. The method for controlling the terminal resident network comprises: acquiring capability information of a terminal (S 100); determining, on the basis of the capability information, a terminal capable of improving the spectral efficiency by using a Massive MIMO network (S200); and residing, the terminal capable of improving the spectral efficiency by using the Massive MIMO network, in the Massive MIMO network (S300).

## Description

### CROSS-REFERENCE TO RELATED APPLICATION

This application is based on and claims the priority of Chinese patent application No. 202010581680.6 filed on June 23, 2020, the disclosure of which is incorporated herein by reference in its entirety.

### TECHNICAL FIELD

The present invention relates to the technical field of communications, in particular to a method and apparatus for controlling terminal device residence in a network and a computer-readable storage medium.

### BACKGROUND

With continuous development of mobile communication technology, 4G and 5G systems have been gradually put into large-scale commercial use. The massive multiple-input multiple-output (Massive MIMO) network, due to its accordance with market demand and great contributions to improving the communication spectrum efficiency of the currently mainstream 4G and 5G systems, has attracted more and more attention. Not all terminal devices in a Massive MIMO network can get high spectrum gain, that is, there are terminal devices that occupy the internal resources of the Massive MIMO network but have poor gain performance. The communication efficiency of these terminal devices in the Massive MIMO network is not high, which is unfavorable for the overall communication efficiency of the Massive MIMO network.

### SUMMARY

The following is a summary of the subject matters described in detail. This summary is not intended to limit the scope of protection of the appended claims.

Embodiments of the present invention provide a method and apparatus for controlling terminal device residence in a network and a computer-readable storage medium.

An embodiment in accordance with an aspect of the present invention provides a method for controlling terminal device residence in a network, which is applied to a Massive MIMO network, including: acquiring capability information of terminal devices; determining, according to the capability information, a terminal device capable of improving spectrum efficiency by utilizing the Massive MIMO network; and allowing the terminal device capable of improving spectrum efficiency by utilizing the Massive MIMO network to reside in the Massive MIMO network.

An embodiment in accordance with another aspect of the present invention provides a method for controlling terminal device residence in a network, which is applied to a non-Massive MIMO network, including: acquiring capability information of terminal devices; determining, according to the capability information, a terminal device capable of improving spectrum efficiency by utilizing a Massive MIMO network; and switching the terminal device capable of improving spectrum efficiency by utilizing the Massive MIMO network to the Massive MIMO network.

An embodiment in accordance with yet another aspect of the present invention provides an apparatus for controlling terminal device residence in a network, which includes a memory, a processor and a computer program stored in the memory and executable by the processor, where the computer program, when executed by the processor, causes the processor to implement the method for controlling terminal device residence in a network as described above.

An embodiment in accordance with still another aspect of the present invention provides a computer-readable storage medium storing computer-executable instructions, where the computer-executable instructions are configured to cause a computer to execute the method for controlling terminal device residence in a network as described above.

The embodiments of the present invention include: acquiring capability information of terminal devices; determining, according to the capability information, a terminal device capable of improving spectrum efficiency by utilizing a Massive MIMO network; and allowing the terminal device capable of improving spectrum efficiency by utilizing the Massive MIMO network to reside in the Massive MIMO network. According to the scheme provided by the embodiments of the present invention, by acquiring the capability information of terminal devices, the terminal device capable of improving spectrum efficiency by utilizing a Massive MIMO network can be determined according to the capability information, that is, it is determined that the terminal device is suitable for the Massive MIMO network. Therefore, the terminal device is allowed to reside in the Massive MIMO network, so as to improve the spectrum efficiency of the Massive MIMO network when the terminal device utilizes the Massive MIMO network, thereby improving the overall communication performance of the Massive MIMO network.

Additional features and advantages of the present invention will be set forth in the subsequent description, and in part will become apparent from the description, or may be learned by practice of the present invention. The purposes and other advantages of the present invention can be realized and obtained by structures particularly noted in the description, the appended claims and the accompanying drawings.

### BRIEF DESCRIPTION OF DRAWINGS

The accompanying drawings are used to facilitate understanding of the technical schemes of the present invention and constitute a part of the description. The accompanying drawings are used to explain the technical schemes of the present invention together with the embodiments of the present invention, and do not constitute a restriction on the technical schemes of the present invention.
Fig. 1 is a schematic diagram of a network architecture for executing a method for controlling terminal device residence in a network provided by an embodiment of the present invention;
Fig. 2 is a flowchart of a method for controlling terminal device residence in a network provided by an embodiment of the present invention;
Fig. 3 is a flowchart of a method for controlling terminal device residence in a network provided by another embodiment of the present invention;
Fig. 4 is a flowchart of a method for controlling terminal device residence in a network provided by another embodiment of the present invention;
Fig. 5 is a flowchart of a method for controlling terminal device residence in a network provided by another embodiment of the present invention;
Fig. 6 is a flowchart of a method for controlling terminal device residence in a network provided by another embodiment of the present invention;
Fig. 7 is a flowchart of a method for controlling terminal device residence in a network provided by another embodiment of the present invention;
Fig. 8 is a flowchart of a method for controlling terminal device residence in a network provided by another embodiment of the present invention; and
Fig. 9 is a flowchart of a method for controlling terminal device residence in a network provided by another embodiment of the present invention.

### DETAILED DESCRIPTION

In order to make the objectives, technical schemes and advantages of the present invention more apparent, the present invention is described in detail in conjunction with the accompanying drawings and embodiments. It should be understood that the particular embodiments described herein are only intended to explain the present invention, and are not intended to limit the present invention.

It should be noted that although a functional module division is shown in the schematic diagrams of the device and a logical order is shown in the flowcharts, the steps shown or described may be performed, in some cases, in a different module division from that of the device or in a different order from that in the flowcharts. The terms "first", "second", etc. in the description, the claims and the above-mentioned drawings are intended to distinguish between similar objects and are not necessarily to describe a specific order or sequence.

The present invention provides a method and apparatus for controlling terminal device residence in a network and a readable storage medium. By acquiring the capability information of terminal devices, a terminal device capable of improving spectrum efficiency by utilizing a Massive MIMO network can be determined according to the capability information, that is, it is determined that the terminal device is suitable for the Massive MIMO network. Therefore, the terminal device is allowed to reside in the Massive MIMO network, so as to improve the spectrum efficiency when the terminal device utilizes the Massive MIMO network, thereby improving the overall communication performance of the Massive MIMO network.

The embodiments of the present invention will be explained below with reference to the accompanying drawings.

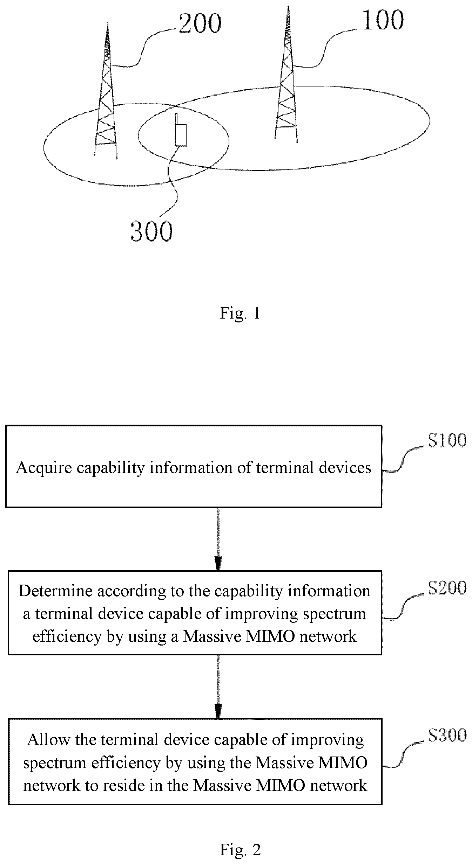

As shown in Fig. 1, a schematic diagram of a network architecture provided by an embodiment of the present invention is depicted.

Referring to Fig. 1, the network architecture includes a first base station 100 corresponding to a Massive MIMO network and a second base station 200 corresponding to a non-massive MIMO network. In the network architecture shown in Fig. 1, it can be clearly seen that the communication ranges of the Massive MIMO network and the non-Massive MIMO network overlap, which means that terminal devices 300 in the massive MIMO network and the non-massive MIMO network can be switched between the coverage areas of the two networks, such that the internal resources of the Massive MIMO network and the non-Massive MIMO network can be allocated more reasonably, and the communication performance of the Massive MIMO network and the non-massive MIMO network can be optimized. Currently the popularity of usages or deployments for massive MIMO networks may be not high, in practical applications, the overall scale of the non-Massive MIMO network may be larger than that of the Massive MIMO network. However, the communication speed and internal capacity of the Massive MIMO network are generally larger than those of the non-Massive MIMO network.

In an embodiment, the Massive MIMO network can be applied to, but is not limited to, 5G communication systems and 4G communication systems. When applied to 4G communication systems, the Massive MIMO network can be a time-division duplex massive multiple-input multiple-output (TDD Massive MIMO) network, and can also be a frequency-division duplex massive multiple-input multiple-output (FDD Massive MIMO) network.

In an embodiment, the second base station 200 may be, but is not limited to, a macro base station, a micro base station, or a repeater and the like.

The network architecture and application scenario described in the embodiments of the present invention are for describing the technical schemes of the embodiments of the present invention, and do not constitute a limitation on the technical schemes provided by the embodiments of the present invention.

Those having ordinary skill in the art may understand that a structure of the network architecture shown in Fig. 1 does not constitute a limitation on the embodiments of the present invention and may include more or fewer components than illustrated, or combine some of the components, or use a different arrangement of the components.

Embodiments of the method for controlling terminal device residence in a network provided in this application are given below.

As shown in Fig. 2 which is a flowchart of a method for controlling terminal device residence in a network provided by an embodiment of the present invention, the method can be applied to the network architecture shown in Fig. 1 and includes but is not limited to the following steps.

At S 100, capability information of terminal devices is acquired.

At S200, a terminal device capable of improving spectrum efficiency by utilizing a Massive MIMO network is determined according to the capability information.

At S300, the terminal device capable of improving spectrum efficiency by utilizing the Massive MIMO network is allowed to reside in the Massive MIMO network.

In an embodiment, the capability information of terminal devices is acquired, and the terminal device capable of improving spectrum efficiency in the Massive MIMO network is determined according to the capability information. Because the terminal device has high spectrum efficiency, the terminal device can achieve stable and good communication in the Massive MIMO network, which in turn helps improve the overall communication performance of the Massive MIMO network. Therefore, allowing the terminal device to reside in the Massive MIMO network can improve the overall communication performance of the Massive MIMO network.

In an embodiment, the capability information of the terminal device can be characterized by a characteristic parameter of the terminal device or by a combination of various characteristic parameters, and the characterization may be based on the transmission mode of the terminal device or other application scenarios or functional conditions of the terminal device, which is not limited in this application.

In an embodiment, spectrum efficiency is a basic term in digital communication systems, which is used to characterize the communication performance of a terminal device performing communication in a digital communication system. Generally speaking, the higher the spectrum efficiency of a terminal device, the more stable and reliable the transmission performance of the terminal device in the digital communication system, that is, the terminal device is suitable for the digital communication system and can reside in the digital communication system. The spectral efficiency of a digital communication system is defined as the net bit rate or maximum throughput of the digital communication system divided by the bandwidth of a communication channel or data link, where the net bit rate here refers to useful information rate, excluding error correction codes. In this embodiment, the digital communication system can be either a Massive MIMO network or a non-massive MIMO network.

In an embodiment, the terminal device can utilize the Massive MIMO network to improve spectrum efficiency in the following manner. The Signal-To-Noise Ratio (SINR) of the terminal device is improved by utilizing the Massive MIMO network, that is, to improve the spectrum efficiency of the terminal device by improving the SINR. As the improvement of the SINR will reduce relative noise, a terminal device with a higher SINR will suffer less network interference, so the spectrum efficiency of the terminal device in the Massive MIMO network can be improved. Therefore, the terminal device can utilize the Massive MIMO network to improve spectrum efficiency by improving the SINR. It is worth noting that this embodiment only gives an example of utilizing the Massive MIMO network to improve spectrum efficiency. In fact, other implementations can be used to improve the spectrum efficiency of a terminal device based on the characteristics of the Massive MIMO network and the capability information of the terminal device itself, but the basic principle is the same. Those having ordinary skill in the art can think of other similar implementations to improve spectrum efficiency by utilizing the Massive MIMO network according to the content of this embodiment, which will not be described here.

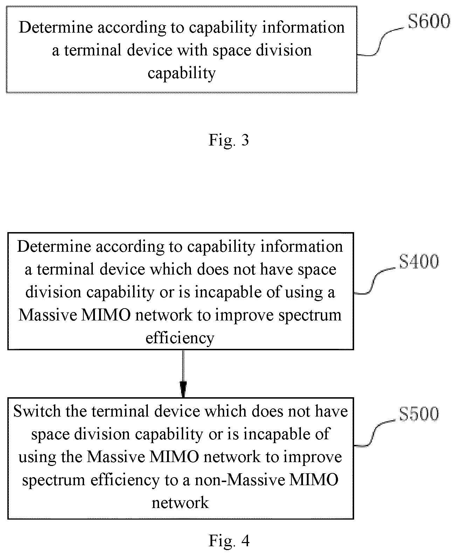

As shown in Fig. 3 which is a flowchart of a method for controlling terminal device residence in a network provided by another embodiment of the present invention, before S200, the method further includes the following step.

At S600, a terminal device with space division capability is determined according to the capability information.

In an embodiment, space division capability is defined with regard to terminal devices in the Massive MIMO network. If the Massive MIMO network can distinguish different data of the same terminal device based on the division of a network space, that is, the same frequency band can be reused in different spaces, it is called space division multiplexing technology. Accordingly, if a terminal device can perform space division multiplexing in the Massive MIMO network, the terminal device has space division capability; otherwise, the terminal device does not have space division capability. A terminal device having space division capability means that the same frequency band in the Massive MIMO network can be reused in different spaces, which means that the terminal device can utilize the Massive MIMO network to improve spectrum efficiency, that is, the terminal device has space division capability.

In an embodiment, S600 can be performed in the following implementations, so as to determine that the terminal device has space division capability.

In the embodiment, the beam forming (BF) gain and space division edge number of the terminal device can be acquired according to the capability information. In response to the BF gain being greater than a first gain threshold and the space division edge number being greater than a first edge number threshold, it is determined that the terminal device has space division capability. Here, space division edge number is defined as: the number of other terminal devices of which uplink transmission correlation with the current terminal device is lower than a certain threshold. Assuming that a first terminal device and a second terminal device exist, in response to the uplink transmission correlation between the first terminal device and the second terminal device being less than a first correlation threshold, it is determined that a space division edge exists between the two terminal devices, that is, it can be determined that the space division edge numbers of the two terminal devices are both one. Accordingly, on this basis, if a space division edge exists between the first terminal device and a further terminal device, the space division edge number of the first terminal device is two, and so on.

It is worth noting that the specific value of the first gain threshold can be acquired by actually measuring the characteristics of the Massive MIMO network, and the first edge number threshold can be set according to the correlation between terminal devices in the Massive MIMO network, that is, the first gain threshold and the first edge number threshold can be set according to the internal parameters of the Massive MIMO network, the specific values of which are not limited in this embodiment.

In an embodiment, S600 can also be performed in the following implementations, so as to determine that the terminal device has space division capability.

In the embodiment, an angle spread value of the terminal device is acquired according to the capability information, and in response to the angle spread value being less than a first angle threshold, it can be determined that the terminal device has space division capability. In an implementation, because the angle spread of the terminal device is related to space division multiplexing, if the terminal device has a large angle spread area, the communication space of the terminal device will be large, which is not conducive to confining space division multiplexing in a relatively limited communication space. Therefore, a terminal device with an angle spread value within a certain range can be determined as having space division capability.

It is worth noting that the specific value of the first angle threshold can be acquired according to the characteristics of the Massive MIMO network, which is not limited in this embodiment. Moreover, the determination mode of this embodiment can be applied to terminal devices adopting various transmission modes. This embodiment can be implemented under, but is not limited to, the following circumstance: the terminal device is determined to perform transmission in a space frequency block code (SFBC) mode. Here, it is worth noting that the terminal device is determined to perform transmission in the SFBC mode under TM3 transmission, TM4 transmission or TM9 transmission.

In an embodiment, S600 can also be performed in the following implementations, so as to determine that the terminal device has space division capability.

In the embodiment, the number of active beams of the terminal device is acquired according to the capability information, and in response to the number of active beams being less than a first beam threshold, it can be determined that the terminal device has space division capability. In an implementation, because the number of active beams of the terminal device is related to space division multiplexing, if the terminal device has a large number of active beams, the communication space and range of the terminal device will be large, which is not conducive to confining space division multiplexing in a relatively limited communication space. Therefore, a terminal device with the number of active beams within a certain range can be determined as having space division capability.

It is worth noting that the specific value of the first beam threshold can be acquired according to the characteristics of the Massive MIMO network, which is not limited in this embodiment. Moreover, the determination mode of this embodiment can be applied to terminal devices adopting various transmission modes. This embodiment can be implemented under, but is not limited to, the following circumstance: the terminal device is determined to perform transmission in the SFBC mode. Here, it is worth noting that the terminal device is determined to perform transmission in the SFBC mode under TM3 transmission, TM4 transmission or TM9 transmission.

Similar to the above-mentioned embodiments, an implementation of S200 can also be provided, so as to determine, according to the capability information, the terminal device capable of improving spectrum efficiency by utilizing the Massive MIMO network.

In the embodiment, the downlink channel quality indication (CQI) of the terminal device is acquired according to the capability information, and in response to the CQI being greater than a first channel quality threshold, it is determined that the terminal device can utilize the Massive MIMO network to improve spectrum efficiency. In an implementation, the CQI can be acquired by terminal device measurement. The CQI is related to the sensitivity of the terminal device, the transmission characteristics of the Massive MIMO network, etc., and can be utilized to characterize space division multiplexing. If the CQI of the terminal device is low, the communication sensitivity of the terminal device and the transmission effect in the Massive MIMO network will not be high, and the terminal device cannot utilize the Massive MIMO network to improve spectrum efficiency. Therefore, a terminal device with the CQI exceeding a certain threshold can be determined as being capable of improving spectrum efficiency by utilizing the Massive MIMO network.

It is worth noting that the specific value of the first channel quality threshold can be acquired according to the characteristics of Massive MIMO network, which is not limited in this embodiment.

In an embodiment, S200 can also be performed in another implementation, so as to determine according to the capability information the terminal device capable of improving spectrum efficiency by utilizing the Massive MIMO network.

In the embodiment, the space division edge number and space division capability parameter of the terminal device are acquired according to the capability information, and in response to the space division edge number being less than a second edge number threshold and the space division capability parameter being greater than a first threshold, it is determined that the terminal device can utilize the Massive MIMO network to improve spectrum efficiency.

In an embodiment, the space division capability parameter is the sum of the SINR and BF gain. In response to the space division edge number being less than the set second edge number threshold, that is, when the space division edge number is relatively small, as long as the space division capability parameter is large enough, that is, the space division capability parameter is larger than the set first threshold, it can be determined that the terminal device can improve spectrum efficiency by increasing the SINR.

In an embodiment, S200 can also be performed in another implementation, so as to determine according to the capability information the terminal device capable of improving spectrum efficiency by utilizing the Massive MIMO network.

In the embodiment, the space division edge number and space division capability parameter of the terminal device are acquired according to the capability information, and in response to the space division edge number being less than the second edge number threshold and the space division capability parameter being greater than the first threshold and less than a second threshold, it is determined that the terminal device can utilize the Massive MIMO network to improve spectrum efficiency. In an implementation, the space division edge number indicates whether the terminal device has space division capability. The space division capability parameter is the sum of the SINR and BF gain, and the space division capability parameter corresponds to the CQI of the terminal device, and can be determined by the CQI of the terminal device. The space division capability parameter can indicate the capability of the terminal device to improve spectrum efficiency by increasing the SINR. In practice, if the space division capability parameter is small, the terminal device cannot improve spectrum efficiency by increasing the SINR. Similarly, when the space division capability parameter of the terminal device reaches a basically saturated level, increasing the SINR will not improve the spectrum efficiency of the terminal device. It can be seen that when the space division capability parameter is between the two thresholds, spectrum efficiency can be improved by increasing the SINR. Therefore, the terminal device capable of improving spectrum efficiency by utilizing the Massive MIMO network can be determined according to the space division edge number and space division capability parameter of the terminal device.

It is worth noting that the first threshold can be acquired according to the number of antennas of a non-Massive MIMO network corresponding to the maximum TBsize of the terminal device and the number of antennas of the Massive MIMO network, that is, BF gain loss calculated based on the above data plus a conservative amount is taken as the first threshold, where the conservative amount can be acquired in actual communication, and is utilized to counter channel fluctuation in network communication. In addition, the second threshold can also be acquired in actual communication, the specific value of which needs to meet the basic channel quality requirements of the terminal device.

In an embodiment, S200 can also be performed in another implementation, so as to determine according to the capability information the terminal device capable of improving spectrum efficiency by utilizing the Massive MIMO network.

In the embodiment, an angle spread value and BF gain of the terminal device are acquired according to the capability information, and in response to the angle spread value being greater than a second angle threshold and the BF gain being greater than a first gain threshold, it is determined that the terminal device can utilize the Massive MIMO network to improve spectrum efficiency. In an implementation, in response to the BF gain being greater than the first gain threshold, and the angle spread value of the terminal device being within a certain threshold range, the terminal device can be determined to have space division capability. On this basis, as long as the angle spread value is greater than the second angle threshold, it can be ensured that the angle spread of the terminal device is limited within a certain range, and it is determined that the terminal device can utilize the Massive MIMO network to improve spectrum efficiency.

It is worth noting that the first gain threshold and the second angle threshold can be set according to the internal parameters of the Massive MIMO network, the specific values of which are not limited in this embodiment. Moreover, the determination mode of this embodiment can be applied to terminal devices adopting various transmission modes. This embodiment can be implemented under, but is not limited to, the following circumstance: the terminal device is determined to perform transmission in a closed-loop space division multiplexing mode. Here, it is worth noting that the terminal device is determined to perform transmission in the closed-loop space division multiplexing mode under TM9 transmission and TM10 transmission.

In an embodiment, an implementation mode of S300 is also provided, so as to allow the terminal device capable of improving spectrum efficiency by utilizing the Massive MIMO network to reside in the Massive MIMO network.

In the embodiment, in response to the number of terminal devices capable of improving spectrum efficiency by utilizing the Massive MIMO network being greater than a first count threshold, terminal devices with an SINR greater than a first SINR threshold are allowed reside in the Massive MIMO network. In an implementation, considering the influence of actual traffic and space, the number of terminal devices that can reside in the Massive MIMO network is generally limited, that is, too many terminal devices residing in the Massive MIMO network will have adverse effects on the Massive MIMO network. Therefore, by setting the first count threshold, a certain number of terminal devices that can utilize the Massive MIMO network to improve spectrum efficiency can be allowed to reside, and the resident condition is set as "SINR is greater than the first SINR threshold", that is, terminal devices that are more likely to improve the SINR in the Massive MIMO network so as to improve spectrum efficiency have priority to reside, such that terminal devices that are more suitable for residing in the Massive MIMO network can reside on the premise of meeting the terminal device resident requirements of the Massive MIMO network.

As shown in Fig. 4 which is a flowchart of a method for controlling terminal device residence in a network provided by another embodiment of the present invention, the method includes the following steps.

At S400, a terminal device which does not have space division capability or is incapable of utilizing the Massive MIMO network to improve spectrum efficiency is determined according to the capability information.

At S500, the terminal device which does not have space division capability or is incapable of utilizing the Massive MIMO network to improve spectrum efficiency is switched to a non-Massive MIMO network.

In an embodiment, a terminal device which does not have space division capability or is incapable of utilizing the Massive MIMO network to improve spectrum efficiency can be determined according to the capability information. Because of the incapability to improve spectrum efficiency in the Massive MIMO network, the terminal device has no contribution to the communication effect of the Massive MIMO network, but the terminal device still occupies the internal space and resources of the Massive MIMO network, so the terminal device is obviously not conducive to the overall communication of the Massive MIMO network. Therefore, the terminal device can be switched to a non-Massive MIMO network so as to communicate in a more suitable non-Massive MIMO network, and at the same time, the internal space and resources of the Massive MIMO network can be better utilized. Since the foregoing embodiments have described in detail how to determine whether a terminal device has space division capability and can utilize the Massive MIMO network to improve spectrum efficiency, based on the same principle, a terminal device which does not have space division capability or is incapable of utilizing the Massive MIMO network to improve spectrum efficiency can be determined, so no further explanation will be made here to avoid redundancy.

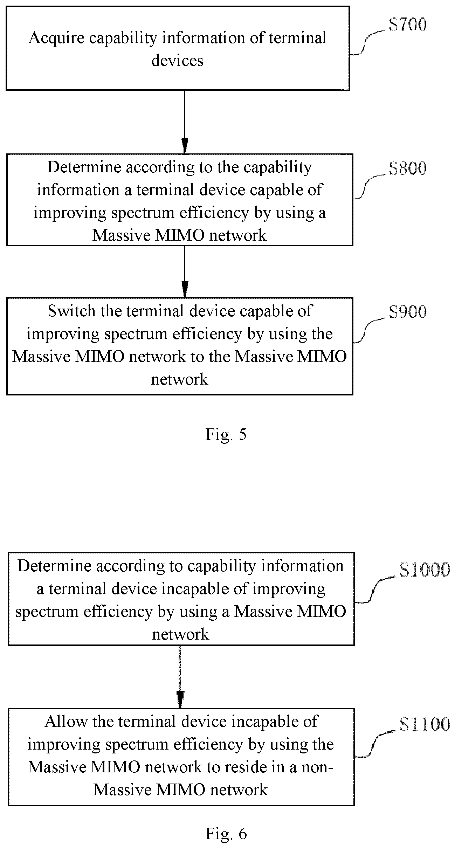

As shown in Fig. 5 which is a flowchart of a method for controlling terminal device residence in a network provided by another embodiment of the present invention, the method can be applied to the network architecture shown in Fig. 1. The method includes the following steps.

At S700, capability information of terminal devices is acquired.

At S800, a terminal device capable of improving spectrum efficiency by utilizing a Massive MIMO network is determined according to the capability information.

At S900, the terminal device capable of improving spectrum efficiency by utilizing the Massive MIMO network is switched to the Massive MIMO network.

In an embodiment, the terminal device capable of improving spectrum efficiency by utilizing the Massive MIMO network can be determined based on non-Massive MIMO network throughput capability information. The terminal device may reside in a non-Massive MIMO network all the time or be switched from a Massive MIMO network. In either case, the non-Massive MIMO network determines that the terminal device is more suitable for the Massive MIMO network, so the terminal device can be switched to the Massive MIMO network so as to communicate in the more suitable Massive MIMO network, and at the same time, the internal space and resources of the non-Massive MIMO network can be better utilized. Since the foregoing embodiments have described in detail how to determine according to the capability information whether a terminal device can improve spectrum efficiency by utilizing the Massive MIMO network, and the basic principle and framework of this embodiment are the same as those of the foregoing embodiments, this embodiment will not be described in detail here to avoid redundancy.

As shown in Fig. 6 which is a flowchart of a method for controlling terminal device residence in a network provided by another embodiment of the present invention, the method includes the following steps.

At S 1000, a terminal device incapable of improving spectrum efficiency by utilizing a Massive MIMO network is determined according to capability information.

At S 1100, the terminal device incapable of improving spectrum efficiency by utilizing the Massive MIMO network is allowed to reside in a non-Massive MIMO network.

In an embodiment, the non-Massive MIMO network acquires the capability information of terminal devices, and according to the capability information, determines the terminal device incapable of improving spectrum efficiency in the Massive MIMO network, that is, the terminal device is not suitable to reside in the Massive MIMO network, so the terminal device resides in the non-Massive MIMO network which better conforms to the actual communication performance of the terminal device. It can be seen that this embodiment can realize reasonable residence of terminal devices based on the non-massive MIMO network, so as to improve the communication performance of the non-massive MIMO network.

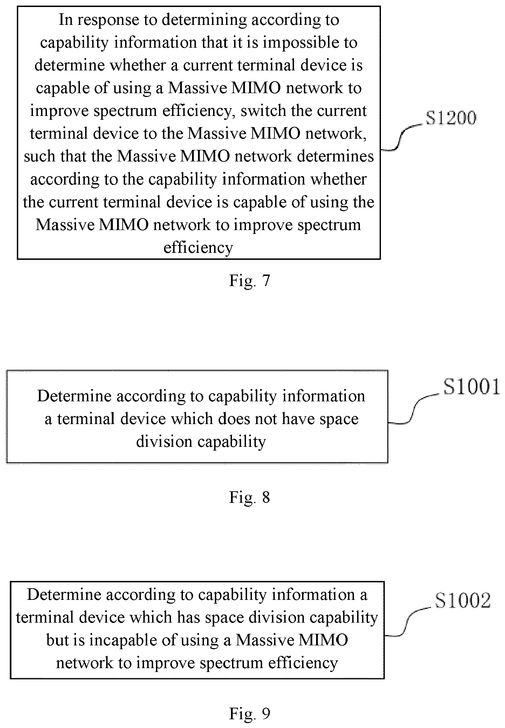

As shown in Fig. 7 which is a flowchart of a method for controlling terminal device residence in a network provided by another embodiment of the present invention, the method includes the following steps.

At 1200, in response to determining according to the capability information that it is impossible to determine whether a current terminal device is capable of utilizing a Massive MIMO network to improve spectrum efficiency, the current terminal device is switched to the Massive MIMO network, such that the Massive MIMO network can determine according to the capability information whether the current terminal device is capable of utilizing the Massive MIMO network to improve spectrum efficiency.

In an embodiment, for a certain terminal device, if a non-Massive MIMO network cannot determine whether the terminal device is capable of utilizing a Massive MIMO network to improve spectrum efficiency according to the capability information, it means that the non-Massive MIMO network does not have the capability to make a judgment on this terminal device, so it is necessary to switch the terminal device to the Massive MIMO network with a judging capability, such that the Massive MIMO network can make a judgment and the situation of each terminal device can be determined.

As shown in Fig. 8 which is a flowchart of a method for controlling terminal device residence in a network provided by another embodiment of the present invention, S 1000 includes the following step.

At S1001, a terminal device which does not have space division capability is determined according to the capability information.

In an embodiment, if a terminal device is determined to have no space division capability, obviously, the terminal device cannot utilize the Massive MIMO network to improve spectrum efficiency. Therefore, it can be accurately known that the terminal device cannot utilize the Massive MIMO network to improve spectrum efficiency, so the terminal device is allowed to reside in a non-massive MIMO network.

As shown in Fig. 9 which is a flowchart of a method for controlling terminal device residence in a network provided by another embodiment of the present invention, S 1000 includes the following step.

At S1002, a terminal device which has space division capability but is incapable of utilizing the Massive MIMO network to improve spectrum efficiency is determined according to the capability information.

In an embodiment, by judging that the terminal device has space division capability and then judging that the terminal device is incapable of utilizing the Massive MIMO network to improve spectrum efficiency, the terminal device incapable of utilizing the Massive MIMO network to improve spectrum efficiency can be determined, and then the terminal device can reside in a non-Massive MIMO network.

In addition, an embodiment of the present invention also provides steps after S900.

In the embodiment, the CQI and the time duration of residing in a non-Massive MIMO network of the terminal device are acquired according to the capability information, and the terminal device is switched to a Massive MIMO network in response to the CQI being larger than a second channel quality threshold and the time duration of residing in the non-massive MIMO network being longer than a first time duration. In an implementation, the terminal device in the non-Massive MIMO network may reside in the non-Massive MIMO network all the time or be switched from the Massive MIMO network, that is, terminal devices can be switched between the Massive MIMO network and the non-massive MIMO network. In practice, terminal devices switched from a massive MIMO network are generally not switched to a Massive MIMO network immediately, so as to avoid ping-pong (or referred to reciprocating) handover of the terminal devices which may cause extra expenses due to troubleshooting. Therefore, by determining the CQI and the time duration of residing in a non-Massive MIMO network of a terminal device, a terminal device with stable channel quality after being switched to a non-Massive MIMO network for a while can be selected, and the terminal device has stable performance at this point and can utilize a massive MIMO network to improve spectrum efficiency, so it is switched to a massive MIMO network.

In addition, an embodiment of the present invention provides an apparatus for controlling terminal device residence in a network, which includes a memory, a processor and a computer program stored in the memory and running on the processor.

The processor and the memory may be connected by a bus or by other means.

It should be noted that the control apparatus in this embodiment can be applied to the network architecture in the embodiment shown in Fig. 1, and the control apparatus in this embodiment can form a part of the network architecture in the embodiment shown in Fig. 1. This embodiment and the embodiment shown in Fig. 1 both belong to the same inventive concept, so this embodiment has the same implementation principle and technical effect as the embodiment shown in Fig. 1, which will not be repeated here.

Non-transient software programs and instructions required to realize the method for controlling terminal device residence in a network in the above embodiments are stored in the memory, and when executed by the processor, cause the processor to implement the method for controlling terminal device residence in a network in the above embodiments, for example, execute the above-described method steps S100 to S300 in Fig. 2, S600 in Fig. 3, S400 to S500 in Fig. 4, S700 to S900 in Fig. 5, S 1000 to S 1100 in Fig. 6, S1200 in Fig. 7, S1001 in Fig. 8 or S1002 in Fig. 9.

The apparatus embodiments described above are only for illustration. The units described as separate components may or may not be physically separated, that is, they may be located at one place or distributed to multiple network units. Some or all of the modules can be selected according to actual needs to achieve the purpose of this embodiment.

An embodiment of the present invention also provides a computer-readable storage medium which stores computer-executable instructions which, when executed by a processor or controller, for example, the processor in the above-mentioned embodiment of the control apparatus, can cause the processor to implement the method for controlling terminal device residence in a network in the above embodiments, such as, to execute the above-described method steps S100 to S300 in Fig. 2, S600 in Fig. 3, S400 to S500 in Fig. 4, S700 to S900 in Fig. 5, S1000 to S 1100 in Fig. 6, S1200 in Fig. 7, S1001 in Fig. 8 or S1002 in Fig. 9.

The embodiments of the present invention include: acquiring capability information of terminal devices; determining, according to the capability information, a terminal device capable of improving spectrum efficiency by utilizing a Massive MIMO network; and allowing the terminal device capable of improving spectrum efficiency by utilizing the Massive MIMO network to reside in the Massive MIMO network. According to the scheme provided by the embodiments of the present invention, by acquiring the capability information of terminal devices, the terminal device capable of improving spectrum efficiency by utilizing a Massive MIMO network can be determined according to the capability information, that is, it is determined that the terminal device is suitable for the Massive MIMO network. Therefore, the terminal device is allowed to reside in the Massive MIMO network, so as to improve the spectrum efficiency when the terminal device utilizes the Massive MIMO network, thereby improving the overall communication performance of the Massive MIMO network.

It can be understood by those having ordinary skill in the art that all or some of the steps of the methods and systems disclosed above can be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software can be distributed on computer-readable media, which can include computer-readable storage media (or non-transitory media) and communication media (or transitory media). As well known to those having ordinary skill in the art, the term computer-readable storage medium includes volatile and nonvolatile, removable and non-removable media implemented in any method or technique for storing information, such as computer-readable instructions, data structures, program modules or other data. A computer storage medium includes but is not limited to RAM, ROM, EEPROM, flash memory or other memory technologies, CD-ROM, digital versatile disk (DVD) or other optical disk storage, cassettes, magnetic tapes, magnetic disk storage or other magnetic storage devices, or any other medium that can be configured to store desired information and can be accessed by a computer. Furthermore, it is well known to those having ordinary skill in the art that communication media typically contain computer-readable instructions, data structures, program modules or other data in a modulated data signal such as a carrier wave or other transmission mechanism, and can include any information transmission media.

The above is a detailed description of some implementations of the present invention, but the present invention is not limited to the above-mentioned embodiments. Those having ordinary skill in the art can also make various equivalent modifications or replacements without departing from the scope of the present invention, and these equivalent modifications or replacements are all included in the scope defined by the appended claims of the present invention.

## Claims

1. A method for controlling terminal device residence in a network, which is applied to a Massive multiple-input multiple-output, MIMO, network, comprising:
acquiring capability information of terminal devices;
determining, according to the capability information, a terminal device capable of improving spectrum efficiency by utilizing the Massive MIMO network; and
allowing the terminal device capable of improving spectrum efficiency by utilizing the Massive MIMO network to reside in the Massive MIMO network.

2. The control method of claim 1, further comprising:
determining, according to the capability information, a terminal device which does not have space division capability or is incapable of utilizing the Massive MIMO network to improve spectrum efficiency; and
switching the terminal device which does not have space division capability or is incapable of utilizing the Massive MIMO network to improve spectrum efficiency to a non-Massive MIMO network.

3. The control method of claim 1, before determining, according to the capability information, a terminal device capable of improving spectrum efficiency by utilizing the Massive MIMO network, the method further comprising:
determining, according to the capability information, a terminal device with space division capability.

4. The control method of claim 3, wherein determining, according to the capability information, a terminal device with space division capability comprises one of:
acquiring an angle spread value of a terminal device according to the capability information, and in response to the angle spread value being less than a first angle threshold, determining that the terminal device has space division capability;
acquiring a number of active beams of a terminal device according to the capability information, and in response to the number of active beams being less than a first beam threshold, determining that the terminal device has space division capability; or
acquiring a beam forming, BF, gain and a space division edge number of a terminal device according to the capability information, and in response to the BF gain being greater than a first gain threshold and the space division edge number being greater than a first edge number threshold, determining that the terminal device has space division capability.

5. The control method of claim 1, wherein determining, according to the capability information, a terminal device capable of improving spectrum efficiency by utilizing the Massive MIMO network comprises one of:
acquiring a downlink channel quality indication, CQI, of a terminal device according to the capability information, and in response to the CQI being greater than a first channel quality threshold, determining that the terminal device is capable of utilizing the Massive MIMO network to improve spectrum efficiency;
acquiring a space division edge number and a space division capability parameter of a terminal device according to the capability information, and in response to the space division edge number being less than a second edge number threshold and the space division capability parameter being greater than a first threshold, determining that the terminal device is capable of utilizing the Massive MIMO network to improve spectrum efficiency, wherein the space division capability parameter is a sum of an Signal-To-Noise Ratio, SINR, and a BF gain; or
acquiring an angle spread value and a BF gain of a terminal device according to the capability information, and in response to the angle spread value being greater than a second angle threshold and the BF gain being greater than a first gain threshold, determining that the terminal device is capable of utilizing the Massive MIMO network to improve spectrum efficiency.

6. The control method of claim 1, wherein allowing the terminal device capable of improving spectrum efficiency by utilizing the Massive MIMO network to reside in the Massive MIMO network comprises:
allowing a terminal device with an SINR greater than a first SINR threshold to reside in the Massive MIMO network in response to the number of terminal devices capable of improving spectrum efficiency by utilizing the Massive MIMO network being greater than a first count threshold.

7. A method for controlling terminal device residence in a network, which is applied to a non-Massive multiple-input multiple-output, MIMO, network, comprising:
acquiring capability information of terminal devices;
determining, according to the capability information, a terminal device capable of improving spectrum efficiency by utilizing a Massive MIMO network; and
switching the terminal device capable of improving spectrum efficiency by utilizing the Massive MIMO network to the Massive MIMO network.

8. The control method of claim 7, further comprising:
determining, according to capability information, a terminal device incapable of improving spectrum efficiency by utilizing a Massive MIMO network; and
allowing the terminal device incapable of improving spectrum efficiency by utilizing the Massive MIMO network to reside in the non-Massive MIMO network.

9. The control method of claim 7, further comprising:
in response to determining, according to the capability information, that it is impossible to determine whether a current terminal device is capable of utilizing the Massive MIMO network to improve spectrum efficiency, switching the current terminal device to the Massive MIMO network, such that the Massive MIMO network determines according to the capability information whether the current terminal device is capable of utilizing the Massive MIMO network to improve spectrum efficiency.

10. The control method of claim 8, wherein determining, according to capability information, a terminal device incapable of improving spectrum efficiency by utilizing a Massive MIMO network comprises:
determining, according to the capability information, a terminal device which does not have space division capability;
or
determining, according to the capability information, a terminal device which has space division capability but is incapable of utilizing the Massive MIMO network to improve spectrum efficiency.

11. The control method of claim 8, after allowing the terminal device incapable of improving spectrum efficiency by utilizing the Massive MIMO network to reside in the non-Massive MIMO network, the method further comprising:
acquiring a channel quality indication, CQI, and a time duration of residing in the non-Massive MIMO network of a terminal device according to the capability information; and
switching the terminal device to a Massive MIMO network in response to the CQI being larger than a second channel quality threshold and the time duration of residing in the non-massive MIMO network being longer than a first time duration.

12. An apparatus for controlling terminal device residence in a network, comprising a memory, a processor and a computer program stored in the memory and executable by the processor, wherein the computer program, when executed by the processor, causes the processor to implement the control method of any one of claims 1 to 6 or the control method of any one of claims 7 to 11.

13. A computer-readable storage medium storing computer-executable instructions, wherein the computer-executable instructions are configured to cause a computer to implement the control method of any one of claims 1 to 6 or the control method of any one of claims 7 to 11.
